# EUROPEAN PATENT SPECIFICATION

(11) **EP 3 822 083 B1**
(45) Date of publication and mention of the grant of the patent: **07.09.2022**
(21) Application number: 20204834.4
(22) Date of filing: 30.10.2020
(51) Int. Cl.: B41J 2/165, D06P 5/30, D06P 5/22

(54) **INK JET RECORDING APPARATUS**
TINTENSTRAHLAUFZEICHNUNGSVORRICHTUNG
APPAREIL D'IMPRESSION À JET D'ENCRE

(30) Priority: 01.11.2019 JP 2019199722
(43) Date of publication of application: 19.05.2021
(73) Proprietor: Seiko Epson Corporation, Tokyo 160-8801 (JP)
(72) Inventor: CHIDATE, Kosuke, Suwa-shi, Nagano 392-8502 (JP)
(74) Representative: Miller Sturt Kenyon

(56) References cited:
- EP-A1- 2 650 339
- EP-A1- 3 363 644
- JP-A- S6 362 739
- US-B1- 6 578 947

## Description

The present application is based on, and claims priority from JP Application Serial Number 2019-199722, filed November 1, 2019.

### BACKGROUND

### 1. Technical Field

The present disclosure relates to an ink jet recording apparatus.

### 2. Related Art

An ink jet recording method is a method of recording by discharging droplets of an ink composition from a fine nozzle, thereby attaching to a recording medium. This method is characterized in that high-speed recording of high-resolution high-quality images is possible by using a relatively inexpensive apparatus. Moreover, by the ink jet recording method, dyeing of textiles and the like (textile printing) is also performed. Conventionally, textile screen printing, textile roller printing, and the like have been employed as printing methods for textiles (woven fabrics or nonwoven fabrics). However, it is advantageous to employ the ink jet recording method in view of efficiency in high-mix low-volume production, immediate printing properties, and so forth. Accordingly, various studies have been conducted for this end. Among such studies, it is known to incorporate a wax into an ink composition that is used for the ink jet recording method to enhance scratch resistance (JP-A-2015-091976, for example).

When an ink jet recording apparatus is used for commercial printing, a cap member for protecting a nozzle is used in some cases to prevent nozzle clogging. In such cases, once generated within the cap member, air bubbles are attached to a nozzle plate to cause discharge failure. As a result, missing dots are observed in some cases. In particular, when the surface tension of an ink composition is lowered to improve coloring properties of recorded articles, it was found that air bubbles are readily generated during opening/closing of the nozzle cap and during suction for cleaning or the like. In other words, an ink jet recording apparatus equipped with a cap member is unsatisfactory in terms of suppressing the occurrence of missing dots while attaining excellent coloring properties of recorded articles.

US6578947 discloses further relevant prior art.

### SUMMARY

The present inventors conducted intensive studies to resolve the above-mentioned problem. As a result, it was found possible to suppress the occurrence of missing dots while attaining excellent coloring properties of recorded articles by using an aqueous ink composition containing a wax having a melting point of 100°C or more and by forming a coating film containing a silicone defoamer on a contact surface of the cap member with the nozzle.

The invention according to claim 1 defines:
an ink jet recording apparatus including: an aqueous ink composition; a liquid ejecting head having a nozzle for discharging the aqueous ink composition; and a cap member for protecting the nozzle, where: the aqueous ink composition has a surface tension of 40 mN/m or less; the aqueous ink composition contains a wax having a melting point of 100°C or more; and the cap member has a coating film containing a silicone defoamer on a contact surface with the nozzle.

Further preferred embodiments of the invention as defined by claim 1 are defined in the dependent claims:
A recording medium to which the aqueous ink composition is attached may be a textile. The aqueous ink composition may further contain an acetylenic surfactant, a silicone surfactant, or a fluorosurfactant. The aqueous ink composition may further contain an organic solvent having an SP value of 22 to 25 (cal/cm³)^{1/2}. The ink jet recording apparatus may further include a pressure cleaning mechanism for pressurizing from a side of the nozzle within the cap member. An opening shape of the cap member may have a long axis/short axis ratio of 2.0 times or more and an opening area of 3.0 to 4.0 cm². The aqueous ink composition may further contain at least either of a pigment and resin particles. The aqueous ink composition may further contain a nonionic dispersant.

### BRIEF DESCRIPTION OF THE DRAWINGS

FIG. 1 is a schematic view of an ink jet recording apparatus according to an embodiment.
FIG. 2 is a schematic view of a cap member according to the embodiment.

### DESCRIPTION OF EXEMPLARY EMBODIMENTS

Hereinafter, an embodiment of the present disclosure (hereinafter, referred to as "present embodiment") will be described in detail with reference to the drawings as necessary. However, the present disclosure is not limited to this embodiment, but is limited by the appended claims. In the drawings, the same element is denoted by the same sign and the repeated description thereof will be omitted. Moreover, positional relationships, such as top, bottom, left, and right, are based on the positional relationships of the drawings unless otherwise indicated. Further, the dimensional ratios of the drawings are by no means limited to those illustrated ones. Ink Jet Recording Apparatus

An ink jet recording apparatus according to the invention is defined in claim 1.

By having the above-described constitution, the ink jet recording apparatus according to the present embodiment can suppress the occurrence of missing dots while attaining excellent coloring properties of recorded articles.

Although the coloring properties of recorded articles can be improved by setting the surface tension of an ink composition to 40 mN/m or less, the use of a cap member causes foaming within the cap member and missing dots tend to occur as a result. As opposed to this, it was found possible to reduce missing dots by incorporating a wax having a melting point of 100°C or more into the ink composition and by forming a coating film containing a silicone defoamer on a contact surface of the cap member with the nozzle. Here, waxes were conventionally known to enhance scratch resistance but have not been known to effectively suppress foaming like this.

The reasons why the above-mentioned effect is obtained by the ink jet recording apparatus according to the present embodiment are not clear but are presumably as follows. Here, the following reasons are non-limiting. In general, when a silicone defoamer of the cap member is peeled off and uniformly dissolved in a solvent of an ink, its defoaming effect is lost. However, it is presumed that a silicone defoamer of the cap member is less likely to be peeled off since a wax is contained in the ink composition. This is presumably because the wax is localized at the surface of the coating film, which contains a silicone defoamer, on the cap since the wax has high affinity with the silicone defoamer but low affinity with water of the ink composition. Thus-localized wax is considered to play a role in preventing dissolution of the silicone defoamer into the ink composition. In addition, by incorporating a wax having a melting point of 100°C or more, the wax hardly dissolves in the ink composition and exists in the dispersed state (solid state). A silicone defoamer having high affinity with the wax is presumably localized together with the wax. For this reason, even if dissolved in the ink composition, a silicone defoamer as foam breaking points or its defoaming effect is considered to be maintained.

Hereinafter, the ink jet recording apparatus according to the present embodiment will be described using, as an example, an on-carriage printer in which an ink cartridge is mounted on a carriage. However, the ink jet recording apparatus according to the present embodiment is not limited to such an on-carriage printer and may be an off-carriage printer in which an ink cartridge is externally fixed without being mounted on a carriage.

Moreover, the printer described hereinafter is a serial printer in which a liquid ejecting head is mounted on a carriage that moves in a predetermined direction; and ink droplets are discharged on recording media as the liquid ejecting head moves along with the movement of the carriage. However, the ink jet recording apparatus according to the present embodiment is not limited to such a serial printer and may be a line printer in which a liquid ejecting head is formed wider than the width of recording media; and ink droplets are discharged on recording media without moving the liquid ejecting head.

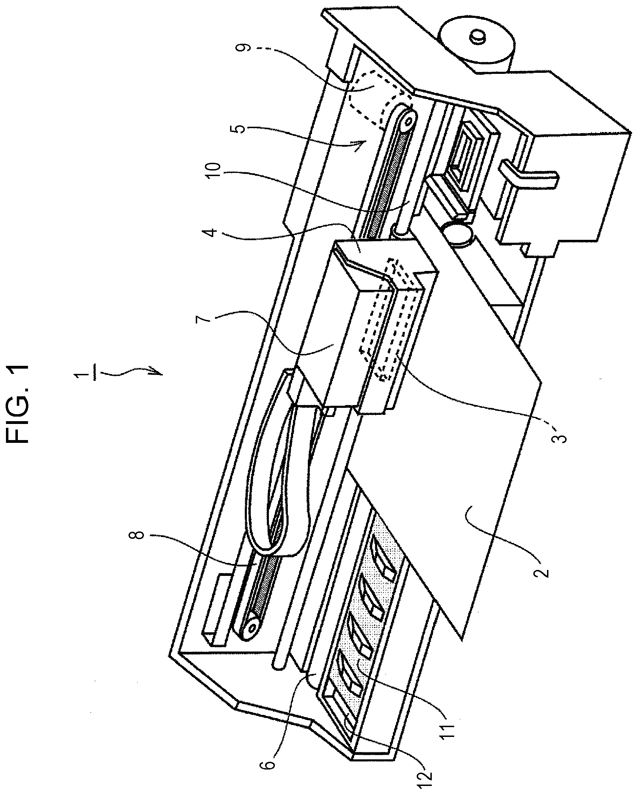

FIG. 1 is a schematic view of the ink jet recording apparatus according to the present embodiment. Exemplary ink jet recording apparatuses include an ink jet printer (hereinafter, printer) equipped with an ink jet head, which is illustrated in FIG. 1. As illustrated in FIG. 1, a printer 1 is an apparatus that records images and the like by ejecting an ink composition on the surface of a recording medium 2. The printer 1 includes, for example, an ink jet head 3, a carriage 4 to which the ink jet head 3 is fixed, a carriage moving mechanism 5 for moving the carriage 4 in the main scanning direction (the longitudinal direction of the printer 1, in other words, the width direction of the recording medium 2), and a transport mechanism 6 for moving the recording medium 2 in the sub-scanning direction (the direction orthogonal to the main scanning direction).

Here, a treatment solution and an ink composition used in the ink jet recording apparatus are stored in ink cartridges 7. The ink cartridges 7 are detachably fitted to the ink jet head 3. Alternatively, it is also possible to adopt the constitution in which an ink cartridge 7 is arranged on the body side of the printer 1 and an ink is supplied to the ink jet head 3 from the ink cartridge 7 through an ink supply tube.

The carriage moving mechanism 5 includes a timing belt 8. The timing belt 8 is driven by a stepper motor 9, such as a DC motor. As the stepper motor 9 operates, the carriage 4 moves backwards and forwards in the main scanning direction along a guide rod 10 installed across the printer 1.

Below the ink jet head 3 during recording operation, a platen 11 is arranged. The platen 11 is arranged to face, via a gap, the nozzle-formed surface (nozzle plate; not illustrated) of the ink jet head 3 during recording operation and supports the recording medium 2. Moreover, a flushing box 12 is provided in the end of the main scanning direction of the platen 11, specifically, in a region outside a region (recording region) in which an ink is ejected on the recording medium 2 disposed on the platen 11. The flushing box 12 is a member for collecting, for example, a penetrating solution and/or an ink ejected from the ink jet head 3 during the preliminary discharge thereof. In the present embodiment, the flushing box 12 is formed as a box that is open on the top (ink jet head 3 side). On the inner bottom surface of the flushing box 12, an absorber (not illustrated) formed of a urethane sponge, for example, is disposed. The flushing box 12 is desirably provided on both sides of the main scanning direction of the platen 11 but may be provided on at least either side.

The ink jet head 3 is a unit that attaches a penetrating solution and/or an ink to the recording medium 2 and includes a nozzle (not illustrated) for discharging the penetrating solution and/or the ink. Exemplary modes of discharging a penetrating solution and/or an ink from the nozzle include a mode (electrostatic pull mode) of applying an intense electric field between the nozzle and an accelerating electrode disposed in front of the nozzle to continuously discharge droplets of a penetrating solution and/or an ink from the nozzle, where the droplets are discharged to correspond to recording information signals through the flight between deflection electrodes; a mode of forcibly discharging droplets of a penetrating solution and/or an oil-based ink by applying pressure with a small pump and mechanically vibrating the nozzle with a crystal oscillator or the like; a mode (piezo mode) of applying pressure corresponding to recording information signals to a penetrating solution and/or an ink, thereby discharging droplets of the penetrating solution and/or the ink for recording; and a mode (thermal jet mode) of heating/bubbling a penetrating solution and/or an ink with microelectrodes in accordance with recording information signals, thereby discharging droplets of the penetrating solution and/or the ink for recording.

As the ink jet head 3, both a line-type ink jet head and a serial-type ink jet head are usable, and a serial-type ink jet head is used in the present embodiment.

Here, an ink jet recording apparatus equipped with a serial-type ink jet head performs recording through a plurality of scans (passes) of discharging an ink while moving the ink jet head relative to a recording medium. Exemplary serial-type ink jet heads include an ink jet head mounted on a carriage that moves in the width direction of a recording medium (the direction crossing the transport direction of the recording medium), where ink droplets are discharged on the recording medium as the ink jet head moves along with the movement of the carriage.

Meanwhile, an ink jet recording apparatus equipped with a line-type ink jet head performs recording through one scan (pass) of discharging an ink composition while moving the ink jet head relative to a recording medium. Exemplary line-type ink jet heads include an ink jet head formed wider than the width of recording media, where ink droplets are discharged on recording media without moving the ink jet head.

Although not illustrated, a drying mechanism may be provided in the ink jet recording apparatus. By providing a drying mechanism, it is possible to quickly evaporate/disperse a liquid medium from a treatment solution and/or an ink composition that have been attached to a recording medium, thereby forming recorded images and the like quickly. Such a drying mechanism is not particularly limited provided that the drying mechanism has a configuration that promotes evaporation/dispersing of a liquid medium contained in a treatment solution and/or an ink composition. Examples include a heating mechanism for applying heat to recording media, a blowing mechanism for sending air to a treatment solution and/or an ink composition, and further, a combined mechanism thereof. Specific examples of the drying mechanism include a forced-air heating apparatus, a radiation heating apparatus, a conduction heating apparatus, a high-frequency drying apparatus, and a microwave drying apparatus.

Drying by such a drying mechanism preferably involves heating, and the ink jet recording apparatus preferably performs recording through discharge on heated recording media. Exemplary heating processes include, but are not particularly limited to, a heat-pressing process, an atmospheric steaming process, a high-pressure steaming process, and a thermofixing process. Exemplary heating mechanisms for recording media include infrared radiation (lamps). In this case, the temperature of heated recording media is preferably 30°C or more and 50°C or less and more preferably 30°C or more and 40°C or less. In this case, it is possible to promote drying of an ink composition in the recording step.

### Cap Member

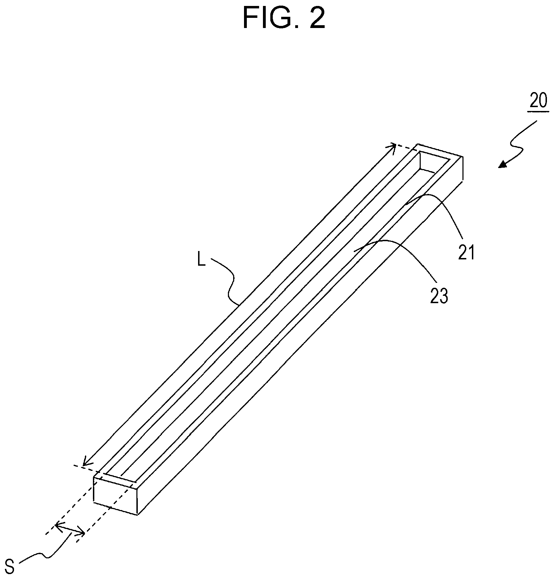

The ink jet recording apparatus according to the present embodiment includes a cap member for protecting the nozzle. FIG. 2 is a schematic view of a cap member according the present embodiment. Exemplary cap members include a cap member 20 illustrated in FIG. 2. The cap member 20 has an opening 21 that surrounds and comes into contact with nozzle rows when the cap member is fitted to the nozzle; and a bottom surface 23 that does not come into contact with the nozzle when the cap member is fitted to the nozzle. Materials for the cap member 20 include, but are not particularly limited to, elastomeric materials, such as rubber.

Regarding the opening shape of the cap member, a long axis L/short axis S ratio is preferably 2.0 times or more, more preferably 4.0 times or more, and further preferably 6.0 times or more. When a cap member having an opening shape with a long axis L/short axis S ratio within these ranges is used, it is more likely to cause foaming within the cap member and missing dots as a result. However, according to the ink jet recording apparatus of the present embodiment, it is possible to reduce missing dots. The upper limit of the long axis L/short axis S ratio is not particularly limited but may be 10.0 times or less, for example.

Regarding the opening shape of the cap member, the opening area is preferably 3.0 to 4.0 cm², more preferably 3.2 to 3.8 cm², and further preferably 3.4 to 3.6 cm². When a cap member having an opening area within these ranges is used, it is more likely to cause foaming within the cap member and missing dots as a result. However, according to the ink jet recording apparatus of the present embodiment, it is possible to reduce missing dots.

The cap member has a coating film containing a silicone defoamer on a contact surface with the nozzle. As illustrated in FIG. 2, the opening 21 of the cap member 20 is coated with a silicone defoamer.

### Silicone Defoamer

Since the cap member has a coating film containing a silicone defoamer, foaming within the cap member as well as the occurrence of missing dots is suppressed. Examples of the silicone defoamer include, but are not particularly limited to, silicone surfactants.

Exemplary commercial products of the silicone surfactants include a three-dimensional siloxane "FOAM BAN^{®} MS-575" (product name from Munzing Chemie GmbH), KM-71, KM-75 (product names from Shin-Etsu Chemical Co., Ltd.), BYK-093, and BYK-094 (product names from BYK Additives & Instruments).

Although not illustrated, the ink jet recording apparatus preferably includes a cleaning mechanism. Such a cleaning mechanism may be a suction cleaning mechanism for sucking from the nozzle side or may be a pressure cleaning mechanism for pressurizing from the nozzle side. From a viewpoint of suppressing foaming within the cap member and thus reducing missing dots, a suction cleaning mechanism is preferable. However, the ink jet recording apparatus according to the present embodiment, even when including a pressure cleaning mechanism, can suppress foaming within the cap member and reduce missing dots.

Here, the ink jet recording apparatus of the present embodiment performs an ink jet recording method by using an ink composition described hereinafter.

### Ink Composition

The ink composition is an aqueous ink composition. An aqueous ink composition herein means an ink composition containing water as a solvent.

### Surface Tension

The ink composition has a surface tension of 40 mN/m or less. When the surface tension is 40 mN/m or less, it is possible to obtain recorded articles having excellent coloring properties. This is because the ink composition readily wets recording media and spreads thereon when the surface tension is 40 mN/m or less. The surface tension of the ink composition is preferably 10 mN/m or more, more preferably 20 mN/m or more, further preferably 25 mN/m or more, and still further preferably 30 mN/m or more. When the ink composition has a surface tension of these lower limits or more, bleeding resistance can be enhanced.

The surface tension of the ink composition can be measured at 25°C using a surface tensiometer by the Wilhelmy method. As a surface tensiometer, "CBVP-7" from Kyowa Interface Science, Inc. may be used, for example.

### Wax

The ink composition contains a wax having a melting point of 100°C or more. When such a wax is contained, it is possible to sustain the defoaming ability of a silicone defoamer contained in the cap member for a longer time and thus reduce missing dots.

Examples of the wax include, but are not particularly limited to, hydrocarbon waxes and ester waxes as condensates of fatty acids with monohydric or polyhydric alcohols. Exemplary hydrocarbon waxes include, but are not particularly limited to, paraffin waxes and polyolefin waxes. These waxes may be used alone or in combination. Among these waxes, hydrocarbon waxes are preferable and polyolefin waxes are more preferable from a viewpoint of enhancing scratch resistance.

Exemplary commercial products of the paraffin waxes include AQUACER 497 and AQUACER 539 (product names from BYK Additives & Instruments).

Exemplary commercial products of the polyolefin waxes include Chemipearl S 120, S 650, S 75N (product names from Mitsui Chemicals, Inc.), AQUACER 501, AQUACER 506, AQUACER 513, AQUACER 515, AQUACER 526, AQUACER 593, and AQUACER 582 (product names from BYK Additives & Instruments).

The melting point of the wax is preferably 106°C or more, more preferably 110°C or more, and further preferably 130°C or more. When the wax has a melting point of these lower limits or more, further remarkable effects of reducing missing dots can be attained. Meanwhile, the melting point of the wax is preferably 200°C or less, more preferably 180°C or less, and further preferably 150°C or less. When the wax has a melting point of these upper limits or less, scratch resistance of recorded articles can be enhanced.

The wax is preferably added, for example, as wax particles contained in an aqueous emulsion, in which the wax is dispersed in water. Such wax particles may contain a surfactant for dispersing, for example.

The average particle size of the wax particles is preferably 30 nm or more and 500 nm or less, more preferably 35 nm or more and 300 nm or less, and further preferably 40 nm or more and 120 nm or less. The average particle size is a volume-based one unless otherwise indicated. The particle size can be measured, for example, by a particle size distribution analyzer using a laser diffraction/scattering method as the measurement principle. Exemplary particle size distribution analyzers include a particle size analyzer using a dynamic light scattering method as the measurement principle (for example, Microtrac UPA from Nikkiso Co., Ltd.).

The content of a wax is preferably 0.5% by mass or more and 4.0% by mass or less, more preferably 0.5% by mass or more and 3.0% by mass or less, and further preferably 0.5% by mass or more and 2.0% by mass or less based on the total mass of an ink composition. When the wax content falls within the above-mentioned ranges, it is possible to sustain the defoaming ability of a silicone defoamer contained in the cap member for a longer time and thus reduce missing dots.

### Colorant

An ink composition used in the present embodiment preferably contains a colorant. The colorant may be a pigment or a dye.

The pigment may be an organic pigment or an inorganic pigment. Exemplary organic pigments include, but are not particularly limited to, azo pigments, such as azo lake pigments, insoluble azo pigments, condensed azo pigments, and chelate azo pigments; polycyclic pigments, such as phthalocyanine pigments, perylene pigments, perinone pigments, anthraquinone pigments, quinacridone pigments, dioxazine pigments, thioindigo pigments, isoindolinone pigments, isoindoline pigments, quinophthalone pigments, and diketopyrrolopyrrole pigments; dye lake pigments, such as lake basic dyes and lake acid dyes; nitro pigments; nitroso pigments; aniline black; and daylight fluorescent pigments. Exemplary inorganic pigments include, but are not particularly limited to, carbon black and metal oxide pigments, such as titanium dioxide, zinc oxide, and chromium oxide.

Exemplary pigments include, but are not particularly limited to, C.I. (Colour Index Generic Name) Pigment Yellow 1, 3, 12, 13, 14, 17, 24, 34, 35, 37, 42, 53, 55, 74, 81, 83, 95, 97, 98, 100, 101, 104, 108, 109, 110, 117, 120, 138, 153, 155, and 180; C.I. Pigment Red 1, 2, 3, 5, 17, 22, 23, 31, 38, 48:2 (Permanent Red 2B(Ba)), 48:2 (Permanent Red 2B(Ca)), 48:3, 48:4, 49:1, 52:2, 53:1, 57:1, 60:1, 63:1, 63:2, 64:1, 81, 83, 88, 101, 104, 105, 106, 108, 112, 114, 122, 123, 146, 149, 166, 168, 170, 172, 177, 178, 179, 185, 190, 193, 209, and 219; C.I. Pigment Violet 19 and 23; C.I. Pigment Blue 1, 2, 15, 15:1, 15:2, 15:3, 15:4, 15:6, 16, 17:1, 56, 60, and 63; and C.I. Pigment Green 1, 4, 7, 8, 10, 17, 18, and 36.

Exemplary pigments for black include, but are not particularly limited to, C.I. Pigment Black 1, 7 (carbon black), and 11. Exemplary pigments for white include, but are not particularly limited to, C.I. Pigment White 1, 4, 5, 6 (titanium dioxide), 6:1, 7, 18, 19, 20, 21, 22, 23, 24, 25, 26, 27, and 28.

In addition to these pigments for coloring, luster pigments, such as pearlescent pigments and metallic pigments, may also be used.

To enhance the dispersibility of a pigment in an ink composition, the pigment may be surface-treated. Such surface treatment of a pigment is a process of introducing a functional group having affinity with a medium of the ink composition into the particle surface of the pigment through physical or chemical treatment. When a pigment is used for an aqueous ink composition described hereinafter, for example, it is preferable to introduce a hydrophilic group, such as a carboxy group or a sulfo group. These pigments may be used alone or in combination.

Exemplary dyes include, but are not particularly limited to, water-soluble dyes, such as acid dyes and basic dyes; disperse dyes used in combination with dispersants (surfactants); and reactive dyes. Publicly known dyes may be employed as these dyes.

When an ink composition contains a colorant, the content of the colorant is preferably 0.1% by mass or more, more preferably 0.5% by mass or more, further preferably 1.0% by mass or more, and still further preferably 1.5% by mass or more based on the total mass of the ink composition. Meanwhile, the colorant content is preferably 30.0% by mass or less, more preferably 20.0% by mass or less, further preferably 15.0% by mass or less, and still further preferably 10.0% by mass or less based on the total mass of the ink composition.

### Dispersant

From a viewpoint of dispersing a pigment, an ink composition preferably contains a dispersant. Such a dispersant may be a nonionic dispersant or an anionic dispersant. Exemplary nonionic dispersants include polyethylene glycol mono(distyrylphenyl) ether. When a nonionic dispersant is contained, a silicone defoamer readily dissolves in the ink composition. Consequently, missing dots tend to occur due to foaming. However, the ink jet recording apparatus according to the present embodiment can reduce missing dots even when the ink composition contains a nonionic dispersant.

The content of a dispersant is preferably 5 parts by mass or more, more preferably 10 parts by mass or more, and further preferably 20 parts by mass or more based on 100 parts by mass of a pigment. Meanwhile, the dispersant content is preferably 80 parts by mass or less, more preferably 60 parts by mass or less, and further preferably 35 parts by mass or less based on 100 parts by mass of the pigment.

An ink composition of the present embodiment preferably contains a surfactant. Such a surfactant acts to lower the surface tension of the ink composition, thereby enhancing wettability toward recording media. Exemplary surfactants include, but are not particularly limited to, acetylenic glycol surfactants, silicone surfactants, and fluorosurfactants.

Examples of the acetylenic glycol surfactants include, but are not particularly limited to, Surfynol 104, 104E, 104H, 104A, 104BC, 104DPM, 104PA, 104PG-50, 104S, 420, 440, 465, 485, SE, SE-F, 504, 61, DF 37, CT 111, CT 121, CT 131, CT 136, TG, GA, and DF 110D (product names from Air Products and Chemicals Inc.); Olfine B, Y, P, A, STG, SPC, E 1004, E 1010, PD-001, PD-002W, PD-003, PD-004, EXP. 4001, EXP. 4036, EXP. 4051, AF-103, AF-104, AK-02, SK-14, and AE-3 (product names from Nissin Chemical Industry Co. Ltd.); and Acetylenol E00, E00P, E40, and E100 (product names from Kawaken Fine Chemicals Co., Ltd.).

Examples of the silicone surfactants include, but are not particularly limited to, polysiloxane compounds, such as polyether-modified organosiloxanes. Exemplary commercial products of the polyether-modified organosiloxanes include BYK-306, BYK-307, BYK-333, BYK-341, BYK-345, BYK-346, and BYK-348 (product names from BYK Additives & Instruments); and KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (product names from Shin-Etsu Chemical Co., Ltd.).

As the fluorosurfactants, fluorine-modified polymers are preferably used, and examples include BYK-340 (product name from BYK Additives & Instruments).

The content of a surfactant may be appropriately changed depending on the surface tension of an ink composition, but is preferably 0.1% by mass or more and 10.0% by mass or less, more preferably 0.2% by mass or more and 5.0% by mass or less, and still more preferably 0.3% by mass or more and 3.0% by mass or less based on the total mass of the ink composition.

### Water

Water contained in an ink composition is not particularly limited, and examples include pure water, such as deionized water, ultrafiltration water, reverse osmosis water, and distilled water; and water from which ionic impurities have been removed as much as possible, such as ultrapure water. Moreover, by using water that has been sterilized by UV irradiation or addition of hydrogen peroxide, for example, it is possible to suppress growth of bacteria and/or fungi during long-term storage of the ink composition. The content of water is not particularly limited but is, for example, preferably 45% by mass or more, more preferably 50% by mass or more and 95% by mass or less, and further preferably 55% by mass or more and 90% by mass or less based on the total mass of the ink composition.

### Organic Solvent

An ink composition may contain an organic solvent as its solvent. By including an organic solvent, it is possible to control the physical properties of an ink jet ink, such as viscosity and surface tension, and/or the behavior when applied to a recording medium, such as drying or permeation.

Exemplary organic solvents include, but are not particularly limited to, 1,2-alkanediols, polyhydric alcohols, 2-pyrrolidone derivatives, and glycol ethers.

Exemplary 1,2-alkanediols include, but are not particularly limited to, 1,2-propanediol, 1,2-butanediol, 1,2-pentanediol, 1,2-hexanediol, and 1,2-octanediol. Such 1,2-alkanediols excellently act to enhance the wettability of an ink and thus uniformly wet recording media. As a result, it is possible to form images and the like with suppressed bleeding.

When an ink composition contains an 1,2-alkanediol, the content of the 1,2-alkanediol is preferably 1.0% by mass or more and 20.0% by mass or less, more preferably 1.5% by mass or more and 10.0% by mass or less, and further preferably 2.0% by mass or more and 5.0% by mass or less based on the total mass of the ink composition.

The term "polyhydric alcohols" herein simply means polyhydric alcohols other than 1,2-alkanediols. Exemplary polyhydric alcohols include, but are not particularly limited to, ethylene glycol, diethylene glycol, triethylene glycol, propylene glycol, dipropylene glycol, 1,3-propanediol, 1,3-butanediol, 1,3-pentanediol, 1,4-butanediol, 1,5-pentanediol, 1,6-hexanediol, 2,3-butanediol, 3-methyl-1,3-butanediol, 3-methyl-1,5-pentanediol, 2-methyl-1,3-propanediol, 2,2-dimethyl-1,3-propanediol, 2-methyl-2,4-pentanediol, trimethylolpropane, and glycerol. By adding a polyhydric alcohol to an ink jet ink, it is possible to suppress drying/solidification of an ink composition in a discharge nozzle of an ejecting head and thus reduce clogging of the discharge nozzle, discharge failure, or the like.

When an ink composition contains a polyhydric alcohol, the content of the polyhydric alcohol is preferably 2.0% by mass or more and 20.0% by mass or less and more preferably 5.0% by mass or more and 15.0% by mass or less based on the total mass of the ink composition.

The 2-pyrrolidone derivatives are compounds having the 2-pyrrolidone skeleton. In addition to unsubstituted 2-pyrrolidone, exemplary 2-pyrrolidone derivatives include, but are not particularly limited to, substituted 2-pyrrolidone, such as N-methyl-2-pyrrolidone, N-ethyl-2-pyrrolidone, and N-vinyl-2-pyrrolidone. Exemplary substituents of the 2-pyrrolidone skeleton include organic groups, such as saturated or unsaturated hydrocarbon groups having 1 or more and 5 or less carbon atoms.

When an ink composition contains a 2-pyrrolidone derivative, the content of the 2-pyrrolidone derivative is preferably 0.5% by mass or more and 10.0% by mass or less and more preferably 1.0% by mass or more and 8.0% by mass or less based on the total mass of the ink composition.

Exemplary glycol ethers include, but are not particularly limited to, alkylene glycol monoethers and alkylene glycol diethers. By adding a glycol ether to an ink jet ink, it is possible to adjust wettability toward and/or permeation rate into recording media and thus clearly form images, patterns, and the like.

Exemplary alkylene glycol monoethers include, but are not particularly limited to, ethylene glycol monomethyl ether, ethylene glycol monoethyl ether, ethylene glycol monoisopropyl ether, ethylene glycol monobutyl ether, ethylene glycol monohexyl ether, ethylene glycol monophenyl ether, diethylene glycol monomethyl ether, diethylene glycol monoethyl ether, diethylene glycol monobutyl ether, diethylene glycol monohexyl ether, triethylene glycol monomethyl ether, triethylene glycol monoethyl ether, triethylene glycol monobutyl ether, tetraethylene glycol monomethyl ether, tetraethylene glycol monoethyl ether, propylene glycol monomethyl ether, propylene glycol monoethyl ether, dipropylene glycol monomethyl ether, and dipropylene glycol monoethyl ether.

Exemplary alkylene glycol diethers include, but are not particularly limited to, ethylene glycol dimethyl ether, ethylene glycol diethyl ether, ethylene glycol dibutyl ether, diethylene glycol dimethyl ether, diethylene glycol diethyl ether, diethylene glycol methyl ethyl ether, diethylene glycol dibutyl ether, diethylene glycol butyl methyl ether, triethylene glycol dimethyl ether, triethylene glycol diethyl ether, triethylene glycol dibutyl ether, triethylene glycol butyl methyl ether, tetraethylene glycol dimethyl ether, tetraethylene glycol diethyl ether, tetraethylene glycol dibutyl ether, propylene glycol dimethyl ether, propylene glycol diethyl ether, dipropylene glycol dimethyl ether, and dipropylene glycol diethyl ether.

When an ink composition contains a glycol ether, the content of the glycol ether is preferably 0.05% by mass or more and 6% by mass or less based on the total mass of the ink composition.

These organic solvents may be used alone or in combination.

An ink composition preferably contains an organic solvent having an SP value of 20 to 25 (cal/cm³)^{1/2} and more preferably contains an organic solvent having an SP value of 22 to 25 (cal/cm³)^{1/2}. By including an organic solvent having an SP value within the predetermined ranges, it is possible to enhance bleeding resistance of recorded articles. In addition, the ink composition tends to have a satisfactory surface tension in terms of coloring properties.

The SP value represents a solubility parameter. Such SP values are values defined by the Hildebrand's theory of regular solutions. The SP values of organic solvents are values calculated from the energy of vaporization and molar volume of atoms and atomic groups by Fedors described in "Coating no Kiso to Kogaku [Coating Fundamentals and Engineering]" (p.53, Yuji Harazaki, Converting Technical Institute). The unit of the SP value in the present embodiment is (cal/cm³)^{1/2} and can be converted into the unit of (J/m³)^{1/2} by 1 (cal/cm³)^{1/2} = 2.046 × 10³ (J/m³)^{1/2}.

Exemplary organic solvents having an SP value of 20 to 25 (cal/cm³)^{1/2} include triethylene glycol monobutyl ether and 1,2-hexanediol as mentioned above, triisopropanolamine, tetraethylene glycol, and N,N-dimethylglycine.

When an organic solvent having an SP value of 20 to 25 (cal/cm³)^{1/2} is contained, the content is preferably 0.1% by mass or more and 5.0% by mass or less, more preferably 0.7% by mass or more and 3.0% by mass or less, further preferably 0.7% by mass or more and 2.0% by mass or less, and still further preferably 1.0% by mass or more and 1.7% by mass or less. When the content falls within these ranges, it is possible to further enhance bleeding resistance of recorded articles.

### Other Components

An ink composition may contain a fixing agent. Such a fixing agent acts to improve the fixing properties of the ink composition to recording media and/or the strength of a coating film formed from the ink composition. Exemplary fixing agents include, but are not particularly limited to, water-soluble resins and resin particles.

Exemplary water-soluble resins include, but are not particularly limited to, carboxymethyl cellulose, cellulose acetate, hydroxyethyl cellulose, and salts thereof. When an ink composition contains a water-soluble resin, the content of the water-soluble resin is preferably 0.1% by mass or more and 20.0% by mass or less, more preferably 0.5% by mass or more and 10.0% by mass or less, and still more preferably 1.0% by mass or more and 5.0% by mass or less based on the total mass of the ink composition.

The resin particles are preferably an aqueous resin dispersion, in which fine resin particles are dispersed in an aqueous medium, for example. The resin particles may also be a resin emulsion. As a dispersing method for a resin, forced emulsification utilizing an emulsifier (surfactant) or self-emulsification through introduction of hydrophilic portions (hydrophilic groups) into the resin molecular structure may be employed, for example.

Exemplary resins used for the resin particles include, but are not particularly limited to, acrylic resins, styrene-acrylic resins, fluorene-based resins, urethane resins, polyolefin resins, rosin-modified resins, terpene resins, polyester resins, polyamide resins, epoxy resins, vinyl chloride resins, vinyl chloride-vinyl acetate copolymer, and ethylene-vinyl acetate copolymer. These resins may be used alone or in combination.

When an ink composition contains resin particles, the content of the resin particles is preferably 2.0% by mass or more and 25.0% by mass or less, more preferably 4.0% by mass or more and 15.0% by mass or less, and further preferably 5.0% by mass or more and 11.0% by mass or less based on the total mass of the ink composition.

An ink composition may contain a pH adjuster. Exemplary pH adjusters include, but are not particularly limited to, basic organic substances and basic inorganic substances. By using these pH adjusters, the pH of an ink composition is preferably adjusted within the range of 7.5 or more and 10.5 or less.

Exemplary basic organic substances include, but are not particularly limited to, alkanolamines, such as triethanolamine, diethanolamine, monoethanolamine, and triisopropanolamine. When an ink composition contains a basic organic substance, the content of the basic organic substance is preferably 0.01% by mass or more and 3.0% by mass or less and more preferably 0.1% by mass or more and 2.0% by mass or less based on the total mass of the ink composition.

Exemplary basic inorganic substances include, but are not particularly limited to, alkali metal and alkaline earth metal hydroxides, such as lithium hydroxide, potassium hydroxide, and calcium hydroxide. When an ink composition contains a basic inorganic substance, the content of the basic inorganic substance is preferably 0.03% by mass or more and 0.15% by mass or less and more preferably 0.05% by mass or more and 0.10% by mass or less based on the total mass of the ink composition.

In addition to the above-mentioned components, an ink composition may contain various additives, such as preservatives, fungicides, antioxidants, and chelating agents.

In the present embodiment, an ink composition is obtained by mixing the above-described respective components in an appropriate order and, as necessary, by removing impurities through filtration or the like. As the mixing method for the respective components, a method of successively adding materials to a vessel equipped with a stirring device, such as a mechanical stirrer or a magnetic stirrer, and mixing with stirring is suitably employed. As the filtration method, centrifugal filtration, filter filtration, or the like may be performed as necessary.

### Recording Media

Recording media used for the ink jet recording apparatus according to the present embodiment are not particularly limited and may be either absorbent recording media or non-absorbent recording media, for example. The ink jet recording apparatus according to the present embodiment is widely applicable to recording media having various absorption properties from non-absorbent recording media, through which a water-soluble ink composition hardly permeates, to absorbent recording media, through which a water-soluble ink composition readily permeates, but is preferably applied to absorbent recording media.

The term "absorbent recording media" in the present embodiment means recording media having properties of absorbing an ink composition. Meanwhile, the term "non-absorbent recording media" means recording media having properties of not absorbing at all or hardly absorbing an ink composition. Quantitatively, the "absorbent recording media" are recording media having a water absorption of more than 10 mL/m² until 30 msec^{1/2} from the start of contact in the Bristow method. Meanwhile, the "non-absorbent recording media" are recording media having the corresponding water absorption of 10 mL/m² or less. The Bristow method is described in detail in standard No. 51 "Paper and Paperboard - a test method for liquid absorption - the Bristow method" of the "JAPAN TAPPI Paper and Pulp Test methods, 2000 edition."

Exemplary absorbent recording media include, but are not particularly limited to, textiles; plain paper, such as electrophotographic paper with high permeability of an ink composition; ink jet paper [ink jet paper having an ink absorbing layer formed from silica particles or alumina particles or an ink absorbing layer formed from a hydrophilic polymer, such as polyvinyl alcohol (PVA) or polyvinylpyrrolidone (PVP)]; and art paper, coated paper, and cast coated paper that have relatively low ink permeability and are used for common offset printing.

Exemplary non-absorbent recording media include, but are not particularly limited to, films and plates of plastics, such as polyvinyl chloride, polyethylene, polypropylene, and polyethylene terephthalate (PET); plates of metals, such as iron, silver, copper, and aluminum; metal plates and plastic films produced by vapor-depositing such various metals; and plates of alloys, such as stainless steel and brass.

### Textiles

The recording media are preferably textiles. Exemplary component fibers of such textiles include, but are not particularly limited to, natural fibers, such as cotton, hemp, wool, and silk; synthetic fibers, such as polypropylene, polyesters, acetate, triacetate, polyamides, and polyurethanes; biodegradable fibers, such as polylactic acid; and blended fibers thereof.

The textiles may be in any form of the above-mentioned fibers, such as woven fabrics, knitted fabrics, and nonwoven fabrics. The weight of a textile used in the present embodiment is not particularly limited but may be, for example, 1.0 oz or more and 10.0 oz or less, preferably 2.0 oz or more and 9.0 oz or less, more preferably 3.0 oz or more and 8.0 oz or less, and further preferably 4.0 oz or more and 7.0 oz or less. When the weight of a textile falls within these ranges, satisfactory recording is possible. Further, an ink jet recording method according to the present embodiment is applicable to a plurality of textiles having different weights, thereby making satisfactory textile printing possible.

Textiles are absorbent recording media and allow ink permeation particularly in the thickness direction of the textiles. Consequently, since surface wetting and spreading is less likely to occur, satisfactory coloring properties are difficult to attain in some cases. However, according to the ink composition of the present embodiment, it is possible to attain satisfactory coloring properties due to the low surface tension.

Exemplary forms of textiles in the present embodiment include fabrics, clothing, and other accessories. Exemplary fabrics include woven fabrics, knitted fabrics, and nonwoven fabrics. Exemplary clothing and other accessories include T shirts after sewing, handkerchiefs, scarfs, towels, carrier bags, fabric bags, curtains, sheets, bed covers, wallpaper and other furniture, and fabrics before and after cutting as parts for sewing. These textiles are in the forms of long ones wound as rolls, those cut into predetermined sizes, or those of product shapes, for example. Here, textiles to which a treatment solution has been applied in advance may be used.

As a textile, a cotton textile colored in advance with a dye may be used. Exemplary dyes for coloring textiles in advance include water-soluble dyes, such as acid dyes and basic dyes; disperse dyes used in combination with dispersants; and reactive dyes. When a cotton textile is used, it is preferable to use a reactive dye suitable for dyeing of cotton.

### Treatment Solution

In the present embodiment, textiles are preferably treated with a treatment solution. Such a treatment solution is attached to textiles in advance when the textiles are used as recording media for ink jet recording. The treatment solution contains, for example, a cationic compound and the above-described water and/or organic solvent.

The cationic compound acts to flocculate components of an ink composition. For this reason, when an ink composition is attached to a textile to which a treatment solution has been attached, the cationic compound promotes flocculation of pigment particles or resin particles and/or increases the viscosity of the ink composition, thereby suppressing absorption of the ink composition into gaps or the inside of the fibers that constitute the textile. Since the cationic compound retains the ink composition on the surface of the textile like this, the coloring properties of the ink composition are enhanced in printed articles while suppressing bleeding.

Exemplary cationic compounds include, but are not particularly limited to, polyvalent metal salts, such as calcium salts and magnesium salts; cationic resins, such as cationic urethane resins, olefin resins, and allylamine resins; cationic surfactants; inorganic acids; and organic acids. Exemplary anions of the polyvalent metal salts include, but are not particularly limited to, carboxylates, such as formates, acetates, and benzoates; sulfates; nitrates; chlorides; and thiocyanates. Among these cationic compounds, polyvalent metal salts are preferably used in view of enhanced coloring properties of pigments and suitability for cotton textiles. These cationic compounds may be used alone or in combination.

The content of a cationic compound is not particularly limited but is preferably 0.1% by mass or more and 40.0% by mass or less, more preferably 2.0% by mass or more and 25.0% by mass or less, and further preferably 5.0% by mass or more and 10.0% by mass or less based on the total amount of a treatment solution. A cationic compound in the content within the above-mentioned ranges suppresses precipitation, separation, or the like of the cationic compound in the treatment solution; promotes flocculation of pigment or resin particles in an ink composition; and suppresses absorption of the ink composition into gaps or the inside of fibers that constitute a textile. Consequently, the strike-through phenomenon of a colorant in the direction toward the rear surface of a printed surface is suppressed while improving coloring properties of printed articles.

An attachment method for a treatment solution is not particularly limited provided that the treatment solution can be attached to at least part of the region of a textile. Exemplary attachment methods for a treatment solution include, but are not particularly limited to, immersion coating by immersing a textile in a treatment solution; roller coating by attaching a treatment solution using a brush, a roller, a spatula, a roll coater, or the like; spray coating by spraying a treatment solution using a spraying apparatus or the like; and ink jet coating by attaching a treatment solution by an ink jet method. Among these methods, immersion coating, roller coating, spray coating, or the like is preferably employed due to the simple configuration of an apparatus and rapid attachment of a treatment solution.

### Ink Jet Recording Method

An ink jet recording method of the present embodiment uses the ink jet recording apparatus equipped with a liquid ejecting head according to the present embodiment. The ink jet recording method of the present embodiment includes a step of discharging an ink composition from the liquid ejecting head (hereinafter, also referred to as "discharge step"). Here, such an ink composition is the above-described ink composition according to the present embodiment.

### Discharge Step

In the ink jet recording method of the present embodiment, the above-described ink composition is discharged from a nozzle. The discharged ink composition is attached to textiles, for example. In other words, textiles may be used as recording media in the ink jet recording method of the present embodiment. In the present embodiment, high-mix low-volume production is readily feasible by employing an ink jet method in the discharge step since printing plates required for analog textile printing, such as screen textile printing, are no longer needed, for example. Simultaneously, it is possible to form high-resolution images, texts, patterns, colors, and the like.

In the discharge step, the amount of an ink composition attached to a recording medium is preferably 10 g/m² or more and 200 g/m² or less and more preferably 15 g/m² or more and 170 g/m² or less per unit area of the recording medium. When the amount of an ink composition attached falls within these ranges, coloring properties of recorded articles are enhanced.

### Heating Step

The ink jet recording method of the present embodiment may further include, after the discharge step, heating of the ink composition attached to a recording medium (hereinafter, also referred to as "heating step").

Exemplary heating processes include, but are not particularly limited to, a heat-pressing process, an atmospheric steaming process, a high-pressure steaming process, and a thermofixing process. Exemplary heat sources include, but are not particularly limited to, infrared lamps. The heating temperature may be any temperature at which resin particles of an ink composition are fused and the medium, such as moisture, is vaporized. Such a heating temperature is preferably 100°C or more and 200°C or less, more preferably 110°C or more and 190°C or less, and further preferably 120°C or more and 180°C or less. Here, the heating temperature in the heating step indicates the surface temperature of an image or the like formed on a textile. The heating time is not particularly limited but is 30 seconds or more and 20 minutes or less, for example.

### Washing Step

The ink jet recording method of the present embodiment may further include, after the heating step, washing of a recording medium to which an ink composition has been attached (hereinafter, also referred to as "washing step"). It is possible to effectively remove a colorant that remains without dyeing fibers by the washing step. The washing step may be performed using water, for example, and soaping may be performed as necessary. Exemplary soaping processes include, but are not particularly limited to, a process of washing off unfixed pigment with a hot soap solution or the like.

### EXAMPLES

Hereinafter, the present disclosure will be described further specifically by means of Examples and Comparative Examples. However, the present disclosure is never limited by the following Examples.

### Preparation of Pigment Dispersion

A mixture obtained from 5 parts by mass of polyethylene glycol mono(distyrylphenyl) ether "Emulgen A-500" (product name from Kao Corporation), 2 parts by mass of isopropyl alcohol, and 80 parts by mass of deionized water was heated to 70°C in a water bath to dissolve the resin component completely. To the resulting solution, 14 parts by mass of C.I. Pigment Red 122 "Cromophtal Pink PT" (product name from Ciba Specialty Chemicals) was added as a quinacridone pigment, premixed for 30 minutes, and then dispersed for 3 hours in a "Cosmo mill" disperser (product name from Nippon Eirich Co., Ltd.) using zirconium beads having a diameter of 0.3 mm as dispersing media to prepare a P.R. 122 dispersion.

### Preparation of Ink Compositions

Ink compositions were obtained by mixing and stirring the respective materials in each composition shown in Table 1 below. Specifically, ink compositions were prepared by uniformly mixing the respective materials and removing insolubles through a filter.

**Table 1-1**

| Ink composition No. | | | A1 | A2 | A3 | A4 | A5 | A6 |
|---|---|---|---|---|---|---|---|---|
| | Pigment | Carbon black (solids content) | 5.0 | | 5.0 | 5.0 | 5.0 | 5.0 |
| | | P.R. 122 dispersion (solids content) | | 3.0 | | | | |
| | | P.Y. 74 dispersion (solids content) | | | | | | |
| | Fixing resin | W-6061 | 6.0 | 6.0 | 6.0 | 6.0 | 6.0 | 6.0 |
| | Surfactant | E-1010 (acetylenic) | 0.3 | 0.3 | | | 0.3 | 0.3 |
| | | BYK-349 (silicone) | | | 0.3 | | | |
| | | S-231 (fluoro) | | | | 0.3 | | |
| | Wax | E-6500 (m.p. 140°C) polyethylene | 1.0 | 1.0 | 1.0 | 1.0 | | |
| | | AQUACER 515 (m.p. 135°C) polyethylene | | | | | 1.0 | |
| Ink composition (mass%) | | E-8237 (m.p. 106°C) polyethylene | | | | | | 1.0 |
| | | AQUACER 537 (m.p. 110°C) paraffin | | | | | | |
| | | AQUACER 539 (m.p. 60°C) paraffin | | | | | | |
| | Organic solvent | Glycerol (SP value 31) | 8.0 | 8.0 | 8.0 | 8.0 | 8.0 | 8.0 |
| | | Triethylene glycol (SP value 27.5) | 3.0 | 3.0 | 3.0 | 3.0 | 3.0 | 3.0 |
| | | BTG (SP value 20.4) | 1.7 | 1.7 | 1.7 | 1.7 | 1.7 | 1.7 |
| | | 1,2-HD (SP value 24.7) | | | | | | |
| | Defoamer | FOAM BAN MS-575 (silicone) | | | | | | |
| | pH adjuster | KOH | 0.1 | 0.1 | 0.1 | 0.1 | 0.1 | 0.1 |
| | Deionized water | | balance | balance | balance | balance | balance | balance |
| | Total amount | | 100.0 | 100.0 | 100.0 | 100.0 | 100.0 | 100.0 |
| Ink surface tension (mN/m) | | | 40 | 40 | 29 | 22 | 40 | 40 |

**Table 1-2**

| Ink composition No. | | | A7 | A8 | A9 | A10 | A11 |
|---|---|---|---|---|---|---|---|
| Ink composition (mass%) | Pigment | Carbon black (solids content) | 5.0 | 5.0 | 5.0 | 5.0 | 5.0 |
| | | P.R. 122 dispersion (solids content) | | | | | |
| | | P.Y. 74 dispersion (solids content) | | | | | |
| | Fixing resin | W-6061 | 6.0 | 6.0 | 6.0 | 6.0 | 6.0 |
| | Surfactant | E-1010 (acetylenic) | 0.3 | 0.3 | 0.3 | 0.3 | 0.3 |
| | | BYK-349 (silicone) | | | | | |
| | | S-231 (fluoro) | | | | | |
| | Wax | E-6500 (m.p. 140°C) polyethylene | | 1.0 | 1.0 | 1.0 | 1.0 |
| | | AQUACER 515 (m.p. 135°C) polyethylene | | | | | |
| | | E-8237 (m.p. 106°C) polyethylene | | | | | |
| | | AQUACER 537 (m.p. 110°C) paraffin | 1.0 | | | | |
| | | AQUACER 539 (m.p. 60°C) paraffin | | | | | |
| | Organic solvent | Glycerol (SP value 31) | 8.0 | 8.0 | 8.0 | 8.0 | 8.0 |
| | | Triethylene glycol (SP value 27.5) | 3.0 | 3.0 | 3.0 | 3.0 | 3.0 |
| | | BTG (SP value 20.4) | 1.7 | | 2.0 | 0.7 | 2.5 |
| | | 1,2-HD (SP value 24.7) | | 1.7 | | | |
| | Defoamer | FOAM BAN MS-575 (silicone) | | | | | |
| | pH adjuster | KOH | 0.1 | 0.1 | 0.1 | 0.1 | 0.1 |
| | Deionized water | | balance | balance | balance | balance | balance |
| | Total amount | | 100.0 | 100.0 | 100.0 | 100.0 | 100.0 |
| Ink surface tension (mN/m) | | | 40 | 40 | 40 | 40 | 40 |

**Table 1-3**

| Ink composition No. | | | A51 | A52 | A53 | A61 | A71 |
|---|---|---|---|---|---|---|---|
| Ink composition (mass%) | Pigment | Carbon black (solids content) | 5.0 | 5.0 | 5.0 | 5.0 | |
| | | P.R. 122 dispersion (solids content) | | | | | |
| | | P.Y. 74 dispersion (solids content) | | | | | 4.5 |
| | Fixing resin | W-6061 | 6.0 | 6.0 | 6.0 | 6.0 | 5.0 |
| | Surfactant | E-1010 (acetylenic) | 0.3 | 0.1 | 0.3 | 0.3 | 0.3 |
| | | BYK-349 (silicone) | | | | | |
| | | S-231 (fluoro) | | | | | |
| | Wax | E-6500 (m.p. 140°C) polyethylene | | 1.0 | | 1.0 | 1.0 |
| | | AQUACER 515 (m.p. 135°C) polyethylene | | | | | |
| | | E-8237 (m.p. 106°C) polyethylene | | | | | |
| | | AQUACER 537 (m.p. 110°C) paraffin | | | | | |
| | | AQUACER 539 (m.p. 60°C) paraffin | | | 1.0 | | |
| | Organic solvent | Glycerol (SP value 31) | 8.0 | 8.0 | 8.0 | 8.0 | 8.0 |
| | | Triethylene glycol (SP value 27.5) | 3.0 | 3.0 | 3.0 | 3.0 | 3.0 |
| | | BTG (SP value 20.4) | 1.7 | 1.7 | 1.7 | 1.7 | 1.7 |
| | | 1,2-HD (SP value 24.7) | | | | | |
| | Defoamer | FOAM BAN MS-575 (silicone) | | | | 0.1 | 0.1 |
| | pH adjuster | KOH | 0.1 | 0.1 | 0.1 | 0.1 | 0.1 |
| | Deionized water | | balance | balance | balance | balance | balance |
| | Total amount | | 100.0 | 100.0 | 100.0 | 100.0 | 100.0 |
| Ink surface tension (mN/m) | | | 40 | 48 | 40 | 40 | 40 |

In the Tables, various abbreviations are as follows.
P.R. 122 dispersion: P.R. 122 dispersion obtained by the above-described method
W-6061: urethane resin particles "Takelac W-6061" (product name from Mitsui Chemicals, Inc.)
E-1010: acetylenic glycol surfactant "Olfine E-1010" (product name from Nissin Chemical Industry Co. Ltd.)
BYK-349: silicone surfactant "BYK-349" (product name from BYK Japan KK)
S-231: fluorosurfactant "Surflon S-231" (product name from AGC Seimi Chemical Co., Ltd.)
E-6500: polyethylene wax emulsion "Haitekku E-6500" (product name from Toho Chemical Industry Co., Ltd., melting point of 140°C, the figures in the Tables represent solids content.)
AQUACER 515: polyethylene wax emulsion "AQUACER 515" (product name from BYK Additives & Instruments, melting point of 135°C, the figure in the Table represents solids content.)
E-8237: polyethylene wax emulsion "Haitekku E-8237" (product name from Toho Chemical Industry Co., Ltd., melting point of 106°C, the figure in the Table represents solids content.)
AQUACER 537: paraffin wax emulsion "AQUACER 537" (product name from BYK Additives & Instruments, melting point of 110°C, the figure in the Table represents solids content.)
AQUACER 539: paraffin wax emulsion "AQUACER 539" (product name from BYK Additives & Instruments, melting point of 60°C, the figure in the Table represents solids content.)
Glycerol (SP value of 31 (cal/cm³)^{1/2})
Triethylene glycol (SP value of 27.5 (cal/cm³)^{1/2})
BTG: triethylene glycol monobutyl ether (SP value of 20.4 (cal/cm³)^{1/2})
1,2-HD: 1,2-hexanediol (SP value of 24.7 (cal/cm³)^{1/2})
MS-575: silicone defoamer "FOAM BAN MS-575" (product name from Munzing Chemie GmbH)

### Preparation of Treatment Solution

A treatment solution was prepared by mixing 20 parts by mass of calcium nitrate tetrahydrate (Ca: 17% by mass), 2 parts by mass of an acrylic resin "Mowinyl 6960" (from The Nippon Synthetic Chemical Industry Co., Ltd.) as a fixing resin, 0.5 parts by mass of an acetylenic surfactant "E 1010" (product name from Nissin Chemical Industry Co. Ltd.), and 77.5 parts by mass of deionized water.

### Pretreatment of Textiles

A treatment solution prepared by the above-described method was applied to a textile (cotton 100%, plain-woven) at 80% pickup and dried at 160°C for 2 minutes.

### Ink Jet Recording Method (Examples 1 to 13, Comparative Examples 1 to 5, Reference Example 1)

An ink jet printer "PM-870C" (product name from Seiko Epson Corporation) equipped with a head having 6 nozzle rows, each of which have 48 nozzle openings with a nozzle gap of 120 dpi (dot/inch), was used. Recording was performed on a textile pretreated as described above at a mass of ink discharged per dot of about 40 ng and a density of attached ink of 360 × 360 dpi in the longitudinal and transverse directions.

### Evaluation

### Coloring Properties

The OD value was measured for each obtained recorded article by using a spectrophotometer "i1-Pro" (from X-Rite Inc.) and evaluated in accordance with the following evaluation criteria.
Evaluation Criteria
A: OD value of 1.3 or more
C: OD value of less than 1.3

### Resistance to Missing Dots

The above-mentioned printer and a cap member for protecting a predetermined size of a nozzle were used. In the Examples and Comparative Examples in which the type of applied defoamer is shown in the Tables, a dilute solution of 1% by mass of a silicone defoamer "FOAM BAN^{®} MS-575" (product name from Munzing Chemie GmbH) was applied to the cap member and dried. After performing recording by the above-described ink jet recording method and then cleaning operation described hereinafter, the number of missing dots was counted during a nozzle check and evaluated in accordance with the following evaluation criteria. Here, whether the nozzle withstands the cleaning operation is investigated.

### Cleaning Operation

After the cap member came into contact with the nozzle, an ink composition was sucked from the cap member under reduced pressure, where 2 g of the ink composition was sucked per chip as the amount for cleaning; and suction was performed by a roller pump provided in a waste liquid channel. After terminating pressure reduction, the cap member was removed from the nozzle.
Evaluation Criteria
A: no missing dot even after 100 times or more of cleaning operations
B: no missing dot even after 70 times or more and less than 100 times of cleaning operations
C: no missing dot even after 10 times or more and less than 70 times of cleaning operations
D: the occurrence of missing dots after less than 10 times of cleaning operations Bleeding Resistance

The boundary state was evaluated when a stripe image consisting of an ink of each example and a yellow ink was printed by the above-described ink jet recording method. Here, an ink composition No. A71 in Table 1 was used as the yellow ink.
Evaluation Criteria
A: almost unnoticeable bleeding
C: slightly noticeable bleeding (lightly colored and/or bleeding portion present partially) Storage Stability

The generation of extraneous materials was observed when 50 g of an ink composition was heated at 60°C for 2 weeks in the presence of 1 g of a bubble unit material (silicone rubber piece) and evaluated in accordance with the following evaluation criteria.
Evaluation Criteria
A: no generation of extraneous materials
C: generation of extraneous materials

**Table 2-1**

| | | | Ex. 1 | Ex. 2 | Ex. 3 | Ex. 4 | Ex. 5 | Ex. 6 | Ex. 7 |
|---|---|---|---|---|---|---|---|---|---|
| Ink composition | Ink composition No. | | A1 | A2 | A3 | A4 | A5 | A6 | A7 |
| | Melting point of wax (°C) | | 140 | 140 | 140 | 140 | 135 | 106 | 110 |
| | Surfactant | Type | E-1010 | E-1010 | BYK-349 | S-231 | E-1010 | E-1010 | E-1010 |
| | | Amount (mass%) | 0.3 | 0.3 | 0.3 | 0.3 | 0.3 | 0.3 | 0.3 |
| | Organic solvent (SP value 22 to 25) | Type | BTG | BTG | BTG | BTG | BTG | BTG | BTG |
| | | Amount (mass%) | 1.7 | 1.7 | 1.7 | 1.7 | 1.7 | 1.7 | 1.7 |
| | Silicone defoamer (mass%) | | - | - | - | - | - | - | - |
| | Surface tension of ink composition (mN/m) | | 40 | 40 | 29 | 22 | 40 | 40 | 40 |
| Cap member | Applied defoamer | | MS-575 | MS-575 | MS-575 | MS-575 | MS-575 | MS-575 | MS-575 |
| | Long axis/short axis ratio | | 7.0 | 7.0 | 7.0 | 7.0 | 7.0 | 7.0 | 7.0 |
| | Opening area (cm²) | | 3.5 | 3.5 | 3.5 | 3.5 | 3.5 | 3.5 | 3.5 |
| Nozzle cleaning mode | | | suction | suction | suction | suction | suction | suction | suction |
| Evaluation | Coloring properties | | A | A | A | A | A | A | A |
| | Resistance to missing dots | | A | B | A | A | A | A | B |
| | Bleeding resistance | | A | A | C | C | A | A | A |
| | Storage stability | | A | - | - | - | - | - | - |

**Table 2-2**

| | | | Ex. 8 | Ex. 9 | Ex. 10 | Ex. 11 | Ex. 12 | Ex. 13 |
|---|---|---|---|---|---|---|---|---|
| Ink composition | Ink composition No. | | A8 | A9 | A10 | A11 | A1 | A1 |
| | Melting point of wax (°C) | | 140 | 140 | 140 | 140 | 140 | 140 |
| | Surfactant | Type | E-1010 | E-1010 | E-1010 | E-1010 | E-1010 | E-1010 |
| | | Amount (mass%) | 0.3 | 0.3 | 0.3 | 0.3 | 0.3 | 0.3 |
| | Organic solvent (SP value 22 to 25) | Type | 1,2-HD | BTG | BTG | BTG | BTG | BTG |
| | | Amount (mass%) | 1.7 | 2.0 | 0.7 | 2.5 | 1.7 | 1.7 |
| | Silicone defoamer (mass%) | | - | - | - | - | - | - |
| | Surface tension of ink composition (mN/m) | | 40 | 40 | 40 | 40 | 40 | 40 |
| Cap member | Applied defoamer | | MS-575 | MS-575 | MS-575 | MS-575 | BYK-028 | MS-575 |
| | Long axis/short axis ratio | | 7.0 | 7.0 | 7.0 | 7.0 | 7.0 | 7.0 |
| | Opening area (cm²) | | 3.5 | 3.5 | 3.5 | 3.5 | 3.5 | 3.5 |
| Nozzle cleaning mode | | | suction | suction | suction | suction | suction | pressure |
| Evaluation | Coloring properties | | A | A | A | A | A | A |
| | Resistance to missing dots | | A | A | A | A | B | A |
| | Bleeding resistance | | A | C | C | C | A | A |
| | Storage stability | | - | - | - | - | - | - |

**Table 2-3**

| | | | Comp. Ex. 1 | Comp. Ex. 2 | Comp. Ex. 3 | Comp. Ex. 4 | Comp. Ex. 5 | Ref. Ex. 1 |
|---|---|---|---|---|---|---|---|---|
| Ink composition | Ink composition No. | | A51 | A52 | A53 | A1 | A1 | A61 |
| | Melting point of wax (°C) | | - | 140 | 60 | 140 | 140 | 140 |
| | Surfactant | Type | E-1010 | E-1010 | E-1010 | E-1010 | E-1010 | E-1010 |
| | | Amount (mass%) | 0.3 | 0.1 | 0.3 | 0.3 | 0.3 | 0.3 |
| | Organic solvent (SP value 22 to 25) | Type | BTG | BTG | BTG | BTG | BTG | BTG |
| | | Amount (mass%) | 1.7 | 1.7 | 1.7 | 1.7 | 1.7 | 1.7 |
| | Silicone defoamer (mass%) | | - | - | - | - | - | 0.1 |
| | Surface tension of ink composition (mN/m) | | 40 | 48 | 40 | 40 | 40 | 40 |
| Cap member | Applied defoamer | | MS-575 | MS-575 | MS-575 | BYK-039 | BYK-012 | - |
| | Long axis/short axis ratio | | 7.0 | 7.0 | 7.0 | 7.0 | 7.0 | 7.0 |
| | Opening area (cm²) | | 3.5 | 3.5 | 3.5 | 3.5 | 3.5 | 3.5 |
| Nozzle cleaning mode | | | suction | suction | suction | suction | suction | suction |
| Evaluation | Coloring properties | | A | C | A | A | A | A |
| | Resistance to missing dots | | D | A | C | D | D | A |
| | Bleeding resistance | | A | A | A | A | A | A |
| | Storage stability | | - | - | - | - | - | C |

The comparison between the Examples and the Comparative Examples reveals that the ink jet recording apparatus according to the present embodiment can suppress the occurrence of missing dots while attaining excellent coloring properties of recorded articles.

The comparison between Example 1 and Comparative Example 1 reveals that the occurrence of missing dots is suppressed by incorporating a wax into an ink composition.

The comparison between Example 1 and Comparative Example 2 reveals that the coloring properties of recorded articles are improved when the surface tension of an ink composition falls within a predetermined range. In addition, the results of Comparative Example 1 and Comparative Example 2 reveal that the problem or the occurrence of missing dots is attributed to the surface tension of an ink composition that falls outside the predetermined range.

The comparison between Example 1 and Comparative Example 3 reveal that the occurrence of missing dots is suppressed when a wax contained in an ink composition has a melting point within a predetermined range.

The comparison between Example 1 and Comparative Examples 4 and 5 reveals that the occurrence of missing dots is suppressed by using a silicone surfactant as a defoamer used for a cap member.

The comparison between Example 1 and Reference Example 1 reveals that a problem with storage stability of an ink composition arises when a silicone defoamer is contained in an ink composition rather than used for a cap member.

The results of Example 1 and Example 2 reveal that the occurrence of missing dots can be suppressed while obtaining recorded articles having excellent coloring properties even when various colorants are used. The results of Examples 1, 3, and 4 reveal that the occurrence of missing dots can be suppressed within a wide range of surface tension while obtaining recorded articles having excellent coloring properties. In addition, the results of these Examples reveal that bleeding of recorded articles can be suppressed when the surface tension falls within a predetermined range.

The results of Examples 1, 5, 6, and 7 reveal that the occurrence of missing dots can be suppressed while obtaining recorded articles having excellent coloring properties even when various waxes are used.

The results of Examples 1, 8, 9, 10, and 11 reveal that the occurrence of missing dots can be suppressed while obtaining recorded articles having excellent coloring properties when an organic solvent having an SP value within a predetermined range is contained.

The results of Examples 1 and 12 reveal that the occurrence of missing dots can be suppressed while obtaining recorded articles having excellent coloring properties even when various silicone deformers are used.

Example 13 reveals that the occurrence of missing dots can be suppressed even when pressure cleaning that pressurizes from the nozzle side is performed. Particularly in the case of pressure cleaning, foaming tends to occur within a cap member. However, it is revealed that the occurrence of missing dots can be suppressed according to the ink jet recording apparatus of the present embodiment.

## Claims

1. An ink jet recording apparatus comprising:
an aqueous ink composition;
a liquid ejecting head having a nozzle for discharging the aqueous ink composition; and a cap member for protecting the nozzle, wherein:
the aqueous ink composition has a surface tension of 40 mN/m or less;
the cap member has a coating film containing a silicone defoamer on a contact surface with the nozzle;
**characterized in that**:
the aqueous ink composition contains a wax having a melting point of 100°C or more.

2. The ink jet recording apparatus according to claim 1, wherein a recording medium to which the aqueous ink composition is attached is a textile.

3. The ink jet recording apparatus according to claim 1 or claim 2, wherein the aqueous ink composition further contains an acetylenic surfactant, a silicone surfactant, or a fluorosurfactant.

4. The ink jet recording apparatus according to any one of the preceding claims, wherein the aqueous ink composition further contains an organic solvent having an SP value of 20 to 25 (cal/cm³)^{1/2}.

5. The ink jet recording apparatus according to any one of the preceding claims, further comprising a pressure cleaning mechanism for pressurizing from a side of the nozzle within the cap member.

6. The ink jet recording apparatus according to any one of the preceding claims, wherein an opening shape of the cap member has a long axis/short axis ratio of 2.0 times or more and an opening area of 3.0 to 4.0 cm².

7. The ink jet recording apparatus according to any one of the preceding claims, wherein the aqueous ink composition further contains at least either of a pigment and resin particles.

8. The ink jet recording apparatus according to any one of the preceding claims, wherein the aqueous ink composition further contains a nonionic dispersant.

## Patentansprüche

1. Tintenstrahlaufzeichnungsvorrichtung, umfassend:
eine wässrige Tintenzusammensetzung;
einen Flüssigkeitsausstoßkopf mit einer Düse zum Abgeben der wässrigen Tintenzusammensetzung; und ein Kappenelement zum Schützen der Düse; wobei:
die wässrige Tintenzusammensetzung eine Oberflächenspannung von 40 mN/m oder weniger aufweist;
das Kappenelement einen Beschichtungsfilm aufweist, der einen Silikonentschäumer auf einer Kontaktfläche mit der Düse beinhaltet;
**dadurch gekennzeichnet, dass**:
die wässrige Tintenzusammensetzung ein Wachs mit einem Schmelzpunkt von 100°C oder mehr beinhaltet.

2. Tintenstrahlaufzeichnungsvorrichtung nach Anspruch 1, wobei ein Aufzeichnungsmedium, an dem die wässrige Tintenzusammensetzung haftet, ein Textil ist.

3. Tintenstrahlaufzeichnungsvorrichtung nach Anspruch 1 oder Anspruch 2, wobei die wässrige Tintenzusammensetzung weiter ein acetylenisches Tensid, ein Silikontensid oder ein Fluortensid beinhaltet.

4. Tintenstrahlaufzeichnungsvorrichtung nach einem der vorstehenden Ansprüche, wobei die wässrige Tintenzusammensetzung weiter ein organisches Lösemittel mit einem SP-Wert von 20 bis 25 (cal/cm³)^{1/2} beinhaltet.

5. Tintenstrahlaufzeichnungsvorrichtung nach einem der vorstehenden Ansprüche, weiter umfassend einen Druckreinigungsmechanismus zur Druckbeaufschlagung von einer Seite der Düse innerhalb des Kappenelements.

6. Tintenstrahlaufzeichnungsvorrichtung nach einem der vorstehenden Ansprüche, wobei eine Öffnungsform des Kappenelements ein Verhältnis lange Achse/kurze Achse vom 2,0-Fachen oder mehr und eine Öffnungsfläche von 3,0 bis 4,0 cm² aufweist.

7. Tintenstrahlaufzeichnungsvorrichtung nach einem der vorstehenden Ansprüche, wobei die wässrige Tintenzusammensetzung weiter mindestens entweder ein Pigment oder Harzpartikel beinhaltet.

8. Tintenstrahlaufzeichnungsvorrichtung nach einem der vorstehenden Ansprüche, wobei die wässrige Tintenzusammensetzung weiter ein nicht ionisches Dispergiermittel beinhaltet.

## Revendications

1. Appareil d'impression à jet d'encre comprenant :
une composition d'encre aqueuse ;
une tête d'éjection de liquide ayant une buse pour décharger la composition d'encre aqueuse ; et
un élément de capuchon pour protéger la buse, dans lequel :
la composition d'encre aqueuse a une tension superficielle de 40 mN/m ou moins ;
l'élément de capuchon a un film de revêtement contenant un antimousse de silicone sur une surface de contact avec la buse ;
**caractérisé en ce que** :
la composition d'encre aqueuse contient une cire ayant un point de fusion de 100°C ou plus.

2. Appareil d'impression à jet d'encre selon la revendication 1, dans lequel un support d'impression sur lequel la composition d'encre aqueuse est fixée est un textile.

3. Appareil d'impression à jet d'encre selon la revendication 1 ou la revendication 2, dans lequel la composition d'encre aqueuse contient en outre un tensioactif acétylénique, un tensioactif siliconé, ou un tensioactif fluoré.

4. Appareil d'impression à jet d'encre selon l'une quelconque des revendications précédentes, dans lequel la composition d'encre aqueuse contient en outre un solvant organique ayant une valeur SP de 20 à 25 (cal/cm³)^{1/2}.

5. Appareil d'impression à jet d'encre selon l'une quelconque des revendications précédentes, comprenant en outre un mécanisme de nettoyage sous pression pour une mise sous pression depuis un côté de la buse dans l'élément de capuchon.

6. Appareil d'impression à jet d'encre selon l'une quelconque des revendications précédentes, dans lequel une forme d'ouverture de l'élément de capuchon a un rapport d'axe long/axe court de 2,0 fois ou plus et une superficie d'ouverture de 3,0 à 4,0 cm².

7. Appareil d'impression à jet d'encre selon l'une quelconque des revendications précédentes, dans lequel la composition d'encre aqueuse contient en outre au moins l'un ou l'autre parmi un pigment et des particules de résine.

8. Appareil d'impression à jet d'encre selon l'une quelconque des revendications précédentes, dans lequel la composition d'encre aqueuse contient en outre un dispersant non ionique.
